# EUROPEAN PATENT APPLICATION

(11) **EP 4 353 090 A1**
(43) Date of publication of application: **17.04.2024**
(21) Application number: 22804113.3
(22) Date of filing: 16.05.2022
(51) Int. Cl.: A23N 15/08, A23N 15/00

(54) **AUTOMATIC MACHINE FOR DRY PROCESSING GARLIC SHEAVES**

(30) Priority: 21.05.2021 ES 202130469
(71) Applicant: Ruipac Tecnológica, S.L., 02639 Albacete (ES)
(72) Inventor: AVENDAÑO CÓRCOLES, Ignacio Javier, 02639 Albacete (ES); AVENDAÑO CÓRCOLES, Francisco José, 02639 Albacete (ES); POVEDA HARO, Rufino, 02639 Albacete (ES)
(74) Representative: Sahuquillo Huerta, Jesús
(86) International application number: PCT/ES2022/070300
(87) International publication number: WO 2022/243590

(57) **Abstract**

The present invention relates to an automatic machine for dry processing garlic sheaves as they are harvested, the machine being formed from a series of phases connected to each other (100, 200, 300 and 400) which house a plurality of modules that make up the machine. There is a first phase for receiving, shaking and cutting sheaves, as well as for removal of waste and discards; a second phase (200) with lifting and distribution modules; a third phase (300) for forward movement and placement; and a fourth phase (400) for brushing, combing, removing roots from garlic bulbs, straightening the stem base or disc thereof, cutting the stem to size, removing, weighing, distributing and storing the garlic bulbs, with a higher performance rate compared to current machines for similar purposes.

## Description

### Object of the invention

The object of the present report is an automatic machine capable of processing garlic sheaves, as they are harvested, for the agri-food industry sector. Its main characteristic is that it is made up of a series of interconnected stages that house a plurality of modules, automating the production process of garlic heads, which are: cleaned, shredded and their roots are eliminated, as well as the grinding of their discs, while avoiding manual and individualized work, which achieves greater precision and uniformity, as well as a high production rate with respect to existing machines for similar purposes.

### Background of the invention

Until not many years ago, garlic head production operations were carried out manually, with a series of structured steps that resulted in an arduous process for the operator (resulting in a lack of homogeneity in the result), as well as slow and costly for the entrepreneur. Innovations in this field have been many and varied but always converging in mechanisms that, by the very nature of process control, although they end up being far superior to those of manual processing, are insufficient for a diligent management of the enormous quantities that humans can collect, thanks to modern agricultural machinery.

With the logical evolution of technology, mechanical solutions aimed at carrying out part of these operations are succeeding each other, as shown by the national utility model ES 1045336 describing a garlic root and stalk cutting machine. Said solution does not assume the admission of sheaves of our invention. The configuration of its stalk cutting table and the system that connects with the hopper of the second body prevent an output of kg/h comparable to that of our machine. The vertical and closed disposition of the second mechanism, would provoke jams if not stops or breakages of the same one; the cutting of the roots by means of cutting disc and its location at the end of the module, cannot report the finish of the invention that we present.

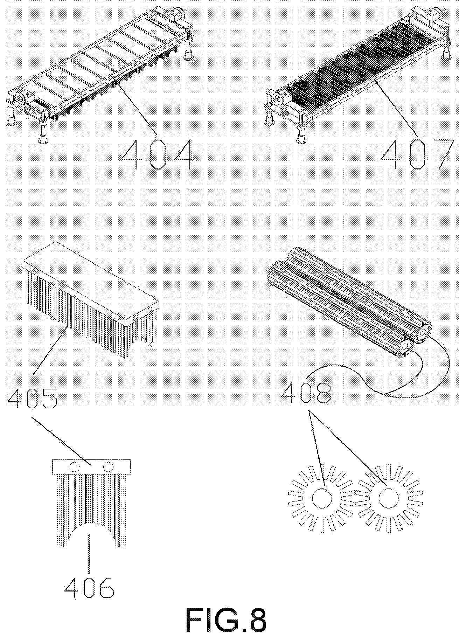

Likewise, we find the national patent ES 2315105, referred to an automatic system for the cutting of stalks and roots of garlic heads, composed of different mechanisms arranged in series that allows to automatically perform the cutting of stalks and roots of garlic heads for their subsequent packaging already cleaned. This innovation describes that the system is fed by bunches which, strictly speaking, are small bundles (in this case of garlic) that can be picked by hand and, therefore, a grouped set of garlic inferior to that formed as a sheaf. In addition, we can observe in the figures that the heads of garlic are piled up already separated and that these have a sort of roots at one end and a sort of longer roots at the opposite end, we understand that these are stems devoid of residues and leaves, of which the garlics conserve when they are picked, We also understand that they have been trimmed at this end to prevent them from interfering with certain parts of the system (this and other observations are not trivial or disparaging, but are comparative and demonstrate the limitations and shortcomings of the state of the art). Therefore, it cannot be fed by sheaves as they are harvested, i.e., accompanied by the remains of the harvest, which our innovation does overcome. It uses pulley-belts and "V" troughs to generate a funnel effect, i.e., although it admits bunches of garlic on its belt, these are directed along a line that places them one by one, while our invention, which coincides in the use of "V" troughs, causes the reverse effect, since it uses them to distribute and accelerate through a series of descending lines. Moreover, it foresees a production of 4,000 heads/hour, which by weighting about 100 grams per head would result in about 400 kg/hour (let us bear in mind that we can stipulate a real average weight per head of garlic, in a range between 50 and 70 grams), which is not comparable with the average capacity of our innovation. Such a plurality of belt-pulleys operates in the same way, slowing down the process and increasing the chances of jamming due to overfeeding or forcing to reduce the machine feed. Likewise, we find that the cutting configuration by means of blades, lip and smooth, can generate a correct stalk cut, but in view of what we observe in FIG. 8 and in particular in the detail of the attachment of the garlic head by means of mechanism 3.2, emphasizing the description of the practical realization of the invention, where it reads: "...in a way that allows its adjustment to the average type of garlic size.... (see figure 8) that catch the garlic by the head (3.2)..." any garlic of superior or inferior size, therefore not average, by the invariable configuration of the clamping 3.2, produces a different cut in each garlic that differs from the average size, being able to leave too much root or stalk, or attacking directly the cloves that conform the head of the garlic, extreme that our machine overcomes by the versatile of its configuration.

Another known invention is the national patent ES 2629606 that describes a machine to remove the stalk and roots of the garlic plant, once the leaves have been removed or the final end has been cut, as with the previous solutions and is a matter solved by ours. The main limitation in this case is the entry of one garlic plant at a time into the machine and in a particular direction or as it is literally described "The individualized selection of each plant through the slot at the bottom of the hopper (...)", as well as the impossibility already pointed out of processing the leaves and thus, we understand, of any other type of materials than the garlic itself, its trimmed stalk and roots, of those described in our invention. In the same way it is observed that the cutting of roots is completely different from that of our solution and not wishing nor being able to enter into any disparaging assessment, but as an act of understanding of its deficiencies or limitations by way of comparison of the state of the art prior to our invention (which is extended to the rest of the inventions of the present section), we understand that the adequacy of the stem cut requires a very specific garlic to which it will be able, as indicated, to regulate the distance, but with which it will have serious problems if the caliber or thickness of the stem that is to enter the described slots does not meet the physical requirements minimally demanded and defined in this paragraph. Finally, the configuration and size of the machine make high production unfeasible, at least at the levels of our invention.

Similarly, the Chinese invention CN 110547490, which claims to operate as a fully automatic garlic root cutter, comprising a complete machine frame, a vibration feeding device, as well as conveying, clamping, rotating and cutting devices. To our understanding, due to its configuration, this is a mechanical alternative that is completely different from ours, with certain limitations generated by the clamping system that reduces the operating capacity, as it happens in the previous cases with different mechanisms. The description itself clears up any doubts in this regard, indicating that the equipment can process 200 kg/h, which, besides not being the highest production of all those described above, is far from our innovation.

As we pointed out at the beginning of this section, we have observed that the problem has been solved to date by innovations that have not provided a solution to the processing of large quantities harvested, in these times when agriculture enjoys high technologies in both the sowing and harvesting processes, which increases the need to process larger quantities in less time. The claims of the way in which

The claims of the way they are configured and performed have already been exposed in their different descriptions and differ both qualitatively and quantitatively, since none of the described solutions or other similar ones that conform the state of the art solve the process of acceptance of sheaves as they are harvested, neither the elimination of leaves and excess of stems, Neither the cleaning and elimination of the roots, the grinding of its saucer and the cutting of the garlic stalk, in the way and order in which the present invention solves it, which surpasses the rest of known innovations from the first phase, stands out for its production levels in kg/h and is unparalleled for its versatility and scalability.

### Description of the invention

The technical problem solved by the present invention is to obtain a machine capable of processing large quantities of garlic sheaves as they have been harvested, cleaning them, de-stemming them and eliminating the roots of the garlic as well as the rectification of the stem disc or saucer, all this in an automatic way, from a design that allows to improve the productive results. Moreover, it does so by producing a bulb, commonly known as garlic head, ready to be put on the market, maintaining its integrity, without being compromised by crushing, product loss or excessive abrasion on the outer layers that make up the natural defense of the bulb and in particular of the cloves of garlic itself, with a particular way of eliminating the roots and their birth. To this end, the automatic machine for the dry processing of garlic sheaves, object of the present invention, is characterized in that it is made up of four phases.

The first phase consists of a platform on which one or more operators can be located, depending on production needs and machine configuration, on which the sheaves are admitted, which are accompanied by plant and mineral remains (sand, stone and mud). These remains are removed by a sheaf shaking module and the sheaves are introduced into the sheaf admission tubes in their natural position, roots downwards and stems erect. From then on, human action is no longer necessary, and the mechanisms will take care of cutting the excess stems and their leaves, transporting the garlic heads to the second stage. If the sheaves are not introduced correctly, the system ejects them together with the remains of the trimmings and waste from the sheaves, the evacuated garlic still being recoverable for production.

In phase two, the garlic is lifted and distributed between inverted V-shaped troughs, spaced 2 cm apart and arranged in a 30° downward slope, gravity positions the stalks downwards, leaving the roots at the top, and deposits the garlic in the next phase. This design allows unwanted debris to fall by gravity between the troughs, preventing it from affecting any subsequent mechanism.

Each line of phase three extends the previous troughs horizontally, avoiding the loss of garlic and forcing them to converge in the center, where there are pairs of advancing rollers at a lower level, equally spaced 2 cm apart, with the left roller moving clockwise and the right roller moving inversely, each roller is provided with bristles arranged in a helical or spiral brush with a pitch of 100 mm, with a counterclockwise longitudinal feed for the left and clockwise for the right roller, which finish placing the garlic with the stalk inverted and the roots at the top. The advance in this phase can be assisted by a kind of upper stops (curtains, inverted U-shaped arches or elements with similar purposes), which control the vertical gauge, so that in the unlikely event that any stalk is not in the correct position, it is forced to turn when it meets these stops. This module allows the evacuation of unwanted debris and ends with extension guides that cantilever over the next stage.

The fourth stage has pairs of overhung spindles at the beginning that receive the garlic heads and transport them along all the processing modules. This configuration prevents the effect of each mechanism and process waste from affecting the transport of the garlic, preventing the accumulation of debris due to gravity itself. Thus, the correctly positioned garlic is conveyed through the following steps and their corresponding mechanisms, all adjustable in height:
- Passage under fixed brush, which removes adherences and impurities from the roots and the adjacent area.
- Step under bristle rollers, which draw the roots into the middle of the rollers, cleaning them in depth and forming them into tufts for the next step, while sanitizing the adjacent area of the garlic heads.
- Step between side rollers that clean the rest of the outline of the garlic heads and lift them up to face the roots to abrasive rollers that break up the roots.
- Passage under milling machine that tightens/rectifies the saucer or stem disc of the garlic.
- Stem cutting to size.

Processed garlic heads are evacuated and stored.

Except in the first phase of sheaf reception and in the collection of those garlic whose sheaf is badly inserted, the machine does not depend on any operator until the storage management.

It should be noted that the prior art refers to the cutting of the stalk of the garlic heads, referring to stalks that have been previously conditioned, i.e., the harvested garlic is grouped in sheaves that have stalks that are not susceptible to be processed by any of the inventions mentioned, since they are excessively long and have leaves and adhesions. This machine is in charge of processing the garlic as it is harvested, which avoids this previous conditioning, which logically speeds up the process and, therefore, its costs in time and economic investment.

The machine described here has the additional advantage that it does not require any calibration other than that of the installation of the height-adjustable elements described above, because it processes all types of garlic sizes, stalks, and roots. Its versatility extends its range of use, which increases its interoperability between different families or types of garlic.

The machine has been designed to be able to operate without damaging the product while, due to its robustness and arrangement of the different phases, it avoids being damaged, jammed or stopped by the product, its remains or adherences. Therefore, except in the milling module, all types of sensors, photocells or similar that may end up being critical points, well known in the industry as they coincide with the waste of the product itself, are avoided, so the optical means of the milling module act when the garlic is practically ready and in different plane of the stem cut, which avoids any affectation of the same. We can indicate that the configuration of the machine is product and environment proof, as long as it is electrically powered, for which it logically has devices and mechanisms for voltage control, start and stop, including emergency stop, as well as speed regulators of the different motors and reduction gears, necessary for the motricity of the elements that make up each phase and that are not glossed as unnecessary.

The average productivity calculation, for a preferred realization of the machine operating with only three operators, is 3750 kg/h, although this figure can be doubled in optimal operating conditions. Moreover, its configuration can be scaled up, which would allow it to increase such production, such advantage is unparalleled according to the known state of the art, i.e.: in in inventions that have one belt or hopper, let alone closed mechanisms, its increase in two belts or two hoppers does not increase the productive capacity unless all the systems that follow them are duplicated, which would be equal to the use of two or more machines, while in our innovation it can be decided which configuration is determined a priori from the assembly of a single machine.

### Brief description of the figures

The following is a very brief description of a series of drawings which help to better understand the invention, and which relate expressly to an embodiment of said invention which is presented as a nonlimiting example thereof.

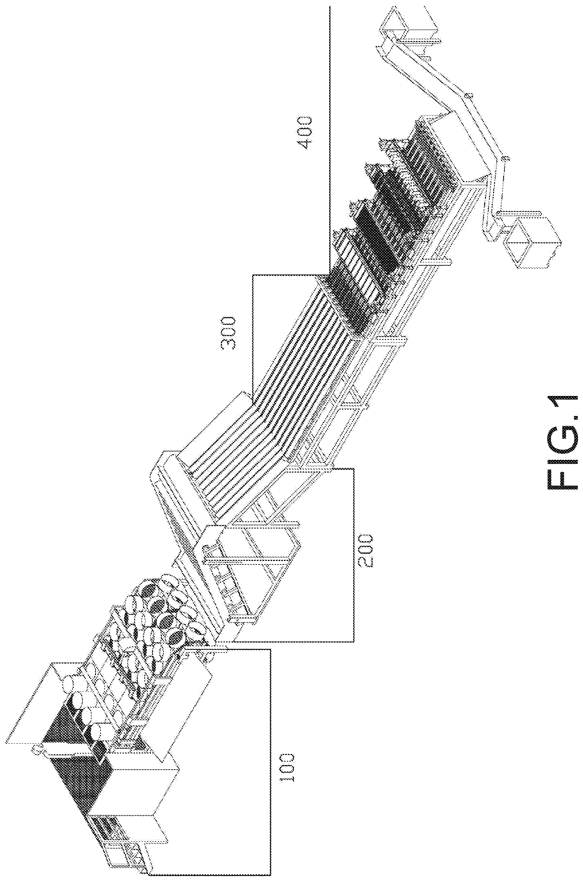

FIG 1. Shows a perspective view of the complete machine, wherein the four stages (100, 200, 300 and 400), which house a plurality of modules, are indicated.

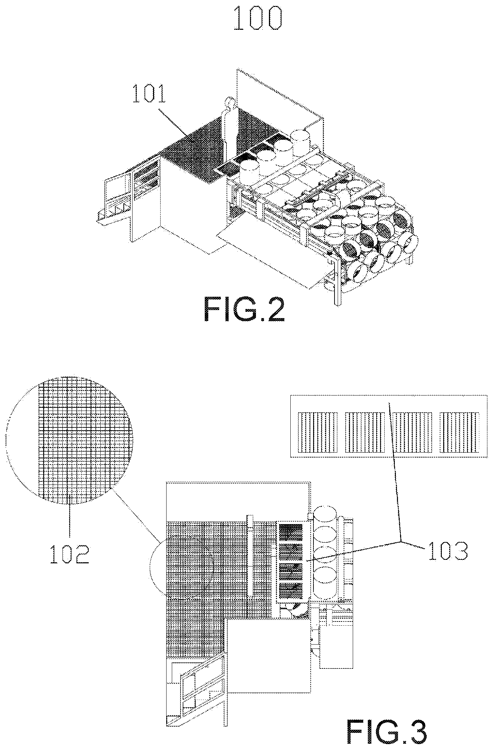

FIG 2. Shows a perspective view of the first stage (100).
FIG 3. Shows a section of the first stage (100), showing the elements of the first stage.

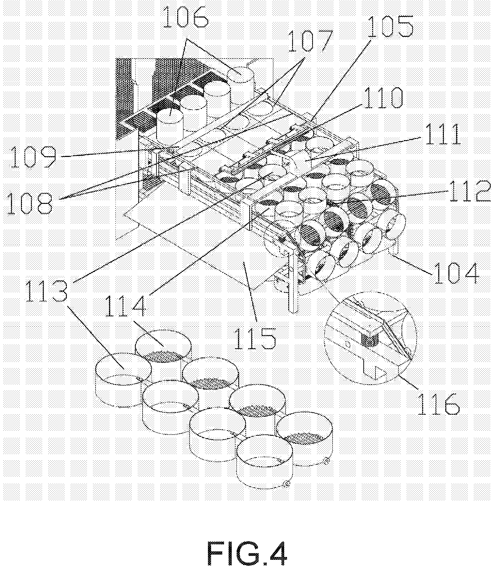

FIG 4. Shows a section of the first stage, showing the elements comprising the second stage.

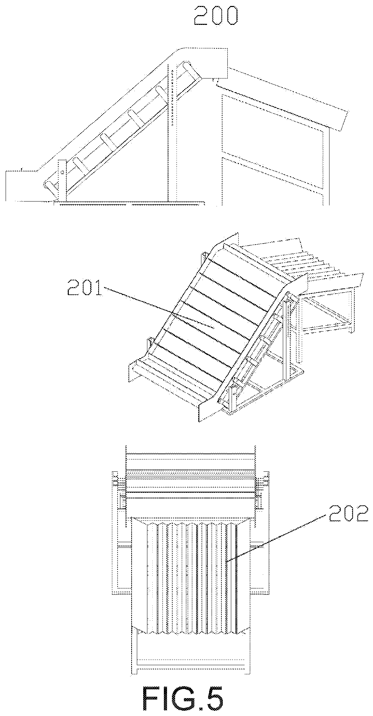

FIG 5. Shows a left profile view and two perspective views of the second stage (200) and its components.

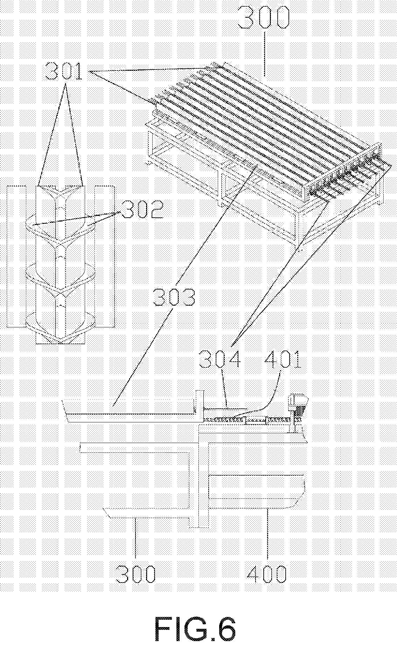

FIG 6. Shows a perspective view of the third stage (300), as well as a detail enlargement of the rollers (301) and a section of the convergence between the end of said stage (300) and the beginning of the fourth stage (400).

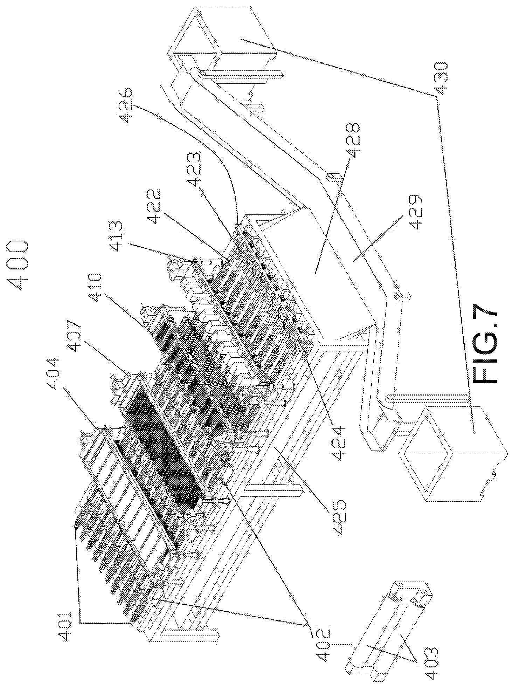

FIG 7. Shows a perspective view of the complete fourth stage (400) and its main modules and elements.
FIG 8. Shows the perspective view of the brushing (404) and combing (407) modules and their relevant components.

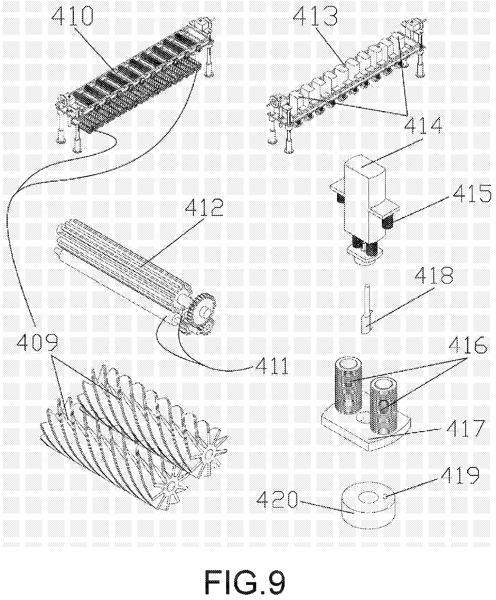

FIG 9. Shows the perspective view of the root removal (410) and root disc grinding (413) modules. The most relevant components of each and an exploded view of the components of a milling machine of said module.

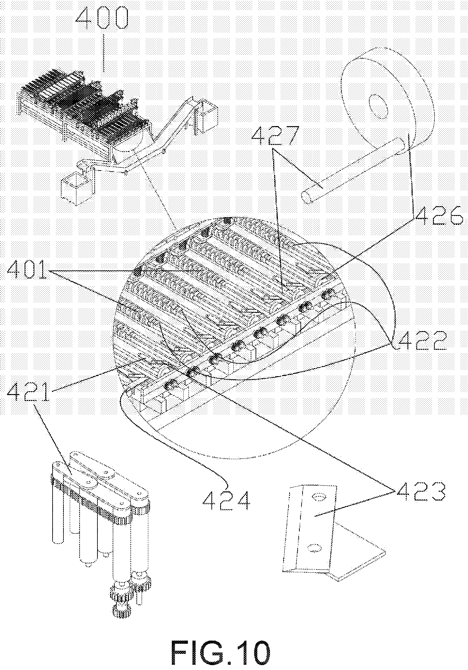

FIG 10. Shows a view of the fourth stage, as a guide, for the enlargement of the detail of the end of the main structure and the elements that compose it.

Exposition of a detailed mode of realization of the invention.

The attached figures show a preferred embodiment of the invention, more specifically of an automatic machine for dry processing of garlic sheaves, the subject of the present report, which is composed of four phases (100, 200, 300 and 400) which serve as housing for a plurality of modules which, related to each other, make up the machine.

The first stage (100) in a preferred embodiment will have two stages, the first stage has an elevated structural platform or feeding dock (101) whose floor is formed by a weft or grid (102) that receives the sheaves of garlic harvested to feed the machine, being flown over this dock the shaking module formed as grills (103).

The second stage, of cutting and discarding, will have after the feeding spring a main structure (104) and, over it, a frame (105) that holds some sheaf intake tubes (106), some blades (107) perforated with the shape of these tubes, some lateral guides (108) and a guide roller (109) that guarantees the correct action of the blades in its back and forth movement, achieved by its connection to an articulated arm (110) connected to a pushing mechanism (111), in this case of hydraulic piston. Below the frame and supported by the main structure, a conveyor belt (112) is connected to evacuation tubes (113) and cylindrical drawers (114). In the center of this structure there is an inclined platform for the evacuation (115) of debris and discards, by vibration of the upper frame of the structure to which it is fixed, and which is supported by springs (116).

In the second phase (200) we will find an elevator belt (201) associated with a garlic head distributor module and a scraps and discards evacuator (202).

In the third phase (300) we will find pairs of endless rollers (301) with inverted turns, formed by bristles (302) whose advance is an axial symmetry. Aided by means that prevent the lateral overrun of the rollers (303), which in this particular case are extensions of the distributor module of the previous phase but in horizontal position and, additionally but not referenced, there could be other realizations that have industrial curtains that limit the passage of erect stems or any mechanism that operates in the same direction, to finish with some extension guides (304) of this module, flown over the spindles of the following phase.

In the fourth and last phase (400) of this detailed realization, we will essentially find pairs of spindles (401) with 2 cm pitch along the same, flown at the beginning of the phase and supported by lateral brackets (402) that are formed by pairs of rollers (403), the spindles are embedded at the end of the structure and geared to their turning mechanisms, driven by motors. Above the spindles an adjustable structure as first module (404) containing fixed bristle brushes (405) with a concave passage (406), a second modular structure (407) adjustable in height with pairs of cylindrical brushes (408) composed of bristles, rotating and with reverse movement, followed by pairs of rotating cylindrical brushes (409) under a third structure (410) adjustable in height which houses metal rollers (411) rotating with reverse movement, which have a third rotating cylindrical brush (412) with bristles, above the previous ones. Next, a module for the grinding of the discs, consisting of a fourth structure (413) adjustable in height, which has milling machines (414), provided with a vertical displacement mechanism (415), a damping system (416) that is located between the milling machine and a base (417) perforated in its center that allows the milling cutter (418) to operate and whose base has a probe (419) and a sponge (420) in its lower part, and optical means that detect the position of the garlic heads, followed by traction belts (421) located under the spindles (401), spindles that are transformed by losing the fillet in rollers (422), horizontal cutting blades (423) oblique to the passage of the guides, adjustable in height and angle of attack thanks to pairs of pins that anchor them in turn on a back-and-forth mechanism (424) located at a lower height than the guides and higher than the traction belts. In the middle of the structure there is an inclined platform for the expulsion of remains (425) ending with rotating plates (426) provided with spindle, crank, or eccentric crank (427) that during their rotation extract the garlic from the guides and send them on an evacuation platform (428) towards a weighing and transport belt (429) that deposits them on containers, drums, boxes or any type of container appropriate for the storage function (430).

## Claims

1. Automatic machine for dry processing of garlic sheaves, consisting of a series of stages (100; 200; 300; and 400) connected together, **characterized in that**: the first stage (100) admits garlic sheaves by means of a receiving stage, comprising: an elevated structural platform or feeding dock and a shaking module, followed by a cutting and discarding stage, comprising: a sheaf intake module, a sheaf cutting module and a transport module, this stage transforms the sheaf assemblies by separating the garlic heads from the leaves and excess stems and discards, by means of evacuation, both the remains of said transformation and the misplaced garlic heads, depositing, those correctly located, in a second stage (200); comprising a lifting module and a distribution module, which deposits the heads in a third phase (300); comprising a module for advancing and positioning the garlic heads, which includes means to avoid their overflow and to ensure their correct position, which distributes the garlic heads in a fourth phase (400); and lastly, comprising a main structure on which conveyor screws run along the entire phase, which phase also comprises: a root brushing module, a root combing module, a root elimination module, a garlic root saucer or cauline disc grinding module, a stalk cutting to size stage, comprising: traction means and cutting means, below all of them in the center of the structure there is an indented platform for the expulsion of remains and finally a garlic evacuation and collection stage, which includes: a garlic evacuation module, weighing and distribution means and container means, where the garlic heads are deposited transformed, cleaned, shredded and their roots eliminated, as well as rectified their culinary disc.

2. Automatic machine for the dry processing of garlic sheaves according to claim 1, where the elevated structural platform of the first phase (100) is formed by a grid or lattice floor, which allows the evacuation of the remains that are detached from the sheaves and avoids their accumulation in said location.

3. Automatic machine for dry processing of garlic sheaves according to claim 2, in which the shaking module has the shape of a grill, which allows the removal of the waste from the sheaves, avoiding their accumulation on said module or on the platform on which it sits.

4. Automatic machine for dry processing of garlic sheaves according to claim 1, wherein the cutting and discarding stage contains:
the sheaf intake module made up of vertical tube sections placed on a frame, which sits on top of a structure;
the sheaf cutting module made up of perforated cutting blades in the same shape and number as the previous tubes, which are placed on the same frame, attached to an articulated arm equipped with a thrust mechanism capable of moving the blades in a longitudinal back-and-forth movement with respect to the phase, based on lateral guides housed in the lower part of the frame of the sheaf intake module and sliding under a roller that prevents the knives from jumping, which together generate a scissor effect for sheaf cutting;
the transport module made up of the structure around which the conveyor belt moves with a chain of binary links on which successive and alternating lines of cylindrical boxes and evacuation tubes are seated in the same number as the previous ones, allowing during its displacement the passage and evacuation of the remains and discards of the sheaf cutting or the housing of the cut heads for their transport to the next stage;
and means of evacuation of this stage consisting of an inclined vibrating platform, located in the center of the transport structure, which receives and evacuates the discards and previous remains as well as the dislocated garlic heads.

5. Automatic machine for the dry processing of garlic sheaves according to claim 1 , where the lifting module of the second phase is a conveyor belt that receives the product of the previous phase and deposits the garlic heads and the remains on the distribution module.

6. Automatic machine for the dry processing of garlic sheaves according to claim 5, where the distribution module is made up of inverted V-shaped chutes, 2 cm apart and arranged in a 30° downward slope, between whose interstices and by gravity the position of the garlic stalks is established and/or the remains that have reached this module are drained, only the garlic heads are moved to the next phase.

7. Automatic machine for the dry processing of garlic sheaves according to claim 1, in which the module for the advancement and positioning of the garlic heads is made up of pairs of parallel rollers 2 cm apart, which allow the evacuation of unwanted remains, arranged longitudinally on the horizontal, with clockwise movement of the left roller and vice versa of the right roller, each roller having bristles arranged in a helicoidal or spiral brush with a pitch of 100 mm, configured an anti-clockwise longitudinal advance for the left brush and clockwise for the right one, that when the garlic heads rest on the rollers that receive the stalk, they are pushed by the point where the brushes intersect during their rotation, advancing the garlic heads and acting in such a way that the garlic that has not managed to place its stalk between the rollers is forced to do it by the action of the bristles and gravity, ending with guides of extension of this module flown over the spindles of the following phase.

8. Automatic machine for the dry processing of garlic sheaves according to claim 7, where the means to avoid overflowing and to ensure a correct position are an extension of the inverted V-shaped channels of the previous module that move parallel to each other and on the upper horizontal of the rollers, they ensure that all the garlic heads position their stems in the space between the troughs and are accepted by the rollers and advanced without the possibility of rebound or overflow in those cases in which the garlic heads are not yet correctly positioned.

9. Automatic machine for the dry processing of garlic sheaves according to claim 8, where the means to ensure a correct position also include upper stops on the inverted V-shaped troughs of said phase, which prevent the passage of stalks in an upright position during the advancement, acting to overcome them and place them correctly, such as curtains that adjust the vertical gauge or in the same sense inverted U-shaped arches.

10. Automatic machine for the dry processing of garlic sheaves according to claim 1, where the fourth and last phase consists of a main structure supporting in its upper part pairs of transport spindles along the whole phase and until the evacuation of the completely processed garlic heads; these spindles are arranged like the rollers of phase three in terms of movement and configuration of the advance of the rotation, in this case of the fillet, but with a pitch of 20 mm; they are fixed to their driving mechanisms at the end of the frame, overhung at the beginning, which prevents the garlic and its waste from interacting with these driving mechanisms and favors the reception of the stalks, for this purpose, the spindles rest on brackets made up of two rollers that are arranged along the line of the structure that makes up the stage; these spindles receive the stalks that hang from the rollers of the previous stage and the advancing effect of the passage of the spindles pushes the stalks and therefore the heads of garlic from them that sit on the upper part of their fillets, with the roots in an upright position, allowing the continuous advance of the garlic heads for their transformation through each module and stage without the effect of the same and the waste of the process affecting the transport of the garlic, until reaching a point where the spindles lose their fillet, being formed as smooth cylinders and acting as guides.

11. Automatic machine for dry processing of garlic sheaves according to claim 10, in which the root brushing module is a fixed brush for each pair of spindles, longitudinally mounted on a common removable and height adjustable structure, whose bristles are arranged concave, allowing the passage of the garlic heads while brushing the roots and the part close to them, which removes adhesions and impurities from the roots and loose skins.

12. Automatic machine for dry processing of garlic sheaves according to claim 10, in which the root combing module is mounted on a second removable and height-adjustable structure, which houses pairs of bristle rollers, parallel to each other and with respect to the spindles, which rotate in such a way that they catch the roots of the garlic heads as they pass and comb them, resulting in a more intense cleaning than the previous one, which manages to detach some roots and shapes the rest of them into tufts or ridges.

13. Automatic machine for the dry processing of garlic sheaves according to claim 10, in which the root removal module is formed by bristle side rollers that receive the garlic heads as they pass through and lift them, while cleaning the rest of the outline; the two metal rollers are separated to avoid contact, but their reverse rotation allows the roots to enter between them and be eliminated; this structure has a third bristle brush located over the abrasives in order to prevent the roots from being thrown out and to ensure their cleanliness.

14. Automatic machine for the dry processing of garlic sheaves according to claim 10, in which the garlic root disc grinding stage consists of a milling machine for each pair of transport spindles, provided with a vertical displacement mechanism, a damping system located between the milling machine and a perforated base in its center that allows the milling cutter to operate and whose base has a feeler and a sponge in its lower part, and optical means that detect the position of the garlic heads, at which time the cutter descends until the sponge comes into contact with the top of the garlic head, the sensor stops the descent of the cutter and allows the cutter to act at the base of the roots of the so-called cauline disc or saucer from which the roots sprout, and then rises to proceed to perform the same operation with the successive garlics.

15. Automatic machine for the dry processing of garlic sheaves according to claim 10, in which, in the stalk cutting stage, the traction means are formed by pairs of traction belts parallel to each other and perpendicular to the spindles, remaining under the latter at the moment they lose their fillet, so that they are in charge of receiving and moving the stalks by traction to the cutting means, which are blades mounted in the horizontal plane between the guides that were previously spindles and the traction belts, being adjustable in height and angle of attack, these blades are arranged obliquely to the advance of the stems and use the back and forth movement of the frame on which they are mounted to cut the stems to the desired size.

16. Automatic machine for the dry processing of garlic sheaves according to claim 10, in which, in the garlic evacuation and collection stage, the evacuation module is a rotating plate provided with a crank or eccentric crank which, during its rotation, contacts the garlic sufficiently to lift it from its base and extract it from the guides, dropping them on an evacuation platform that deposits them on the weighing and distribution means made up of a weighing conveyor belt that distributes them among the container means, which can be drums, boxes or any other type of container: drums, boxes or any type of suitable container.
